Europäisches Patentamt

European Patent Office

Office européen des brevets

(11) Veröffentlichungsnummer: **0 446 959 A2**

## (12) EUROPÄISCHE PATENTANMELDUNG

(21) Anmeldenummer: 91105233.0

(22) Anmeldetag: 21.09.88

(51) Int. Cl.5: **B23P 13/00**, B23P 9/00

Diese Anmeldung is am 03 - 04 - 1991 als Teilanmeldung zu der unter INID-Kode 60 erwähnten Anmeldung eingereicht worden.

(30) Priorität: 24.09.87 DE 3732206
26.04.88 DE 3814102

(43) Veröffentlichungstag der Anmeldung:
18.09.91 Patentblatt 91/38

(60) Veröffentlichungsnummer der früheren Anmeldung nach Art. 76 EPÜ: 0 308 908

(84) Benannte Vertragsstaaten:
AT CH DE ES FR GB IT LI NL SE

(71) Anmelder: **Büchler B-SET AG**
**Wiler Strasse 98**
**CH-9230 Flawil(CH)**

(72) Erfinder: **Büchler, René**
**Weidweg, 2**
**CH-9345 Oberbüren(CH)**

(74) Vertreter: **EGLI-EUROPEAN PATENT**
**ATTORNEYS**
**Widenmayerstrasse 5**
**W-8000 München 22(DE)**

(54) **Verfahren zum Herstellen eines im wesentlichen zylindrischen Schaftes mit einem einstückig in den Schaft übergehenden Zentrierarm.**

(57) Bei einem Verfahren zum Herstellen eines im wesentlichen zylindrischen Schaftes (66) mit einem einstückig in den Schaft (42) übergehenden Zentrierarm (43), der gegen eine Einspannvorrichtung mit einer Nut zum Aufnehmen des Zentrierarmes (43) hochgenau festlegbar ist, wird eine verbesserte Herstellbarkeit des Schaftes bei reduzierten Kosten durch folgende Herstellungsschritte erzielt: Metalldruckgießen, Sintern beziehungsweise Fließpressen des Schaftes (42) aus einem Leichtmetall, aus Messing, aus einer Zinklegierung oder aus einem Sintermaterial; und Kalibrieren des Zentrierarmes (43) zumindest im Bereich seiner Anlageflächen (44, 45) durch Eindrücken des Zentrierarmes in ein Kalibrierwerkzeug, das aus einem harten Material besteht, wobei der Zentierarm im Bereich der Anlageflächen eine plastische Materialverformung erfährt.

EP 0 446 959 A2

Die vorliegende Erfindung betrifft ein Verfahren zum Herstellen eines im wesentlichen zylindrischen Schaftes mit einem einstückig in den Schaft übergehenden Zentrierarm, der gegen eine Einspannvorrichtung mit einer Nut zur Aufnahme des Zentrierarmes hochgenau festlegbar ist, gemäß dem Oberbegriff des Patentanspruchs 1.

Ein Schaft mit einem einstückig in den Schaft übergehenden Zentrierarm ist ein gängiges Mittel zur hochgenauen Positionierung eines beliebigen Gegenstandes, insbesondere eines zu bearbeitenden Werkstückes, gegenüber einer Einspannvorrichtung mit einer Nut zur Aufnahme des Zentrierarmes.

Typischerweise wird ein derartiger Schaft aus einem hochwertigen Maschinenstahl gefertigt. Die Feinbearbeitung des Zentrierarmes im Bereich seiner Anlageflächen mit der Nut der Einspannvorrichtung ist aufwendig und damit kostenintensiv.

Ausgehend von diesem Stand der Technik liegt der vorliegenden Erfindung die Aufgabe zugrunde, ein Verfahren der eingangs genannten Art so weiterzubilden, daß der Schaft mit seinem einstückig in den Schaft übergehenden Zentrierarm einfacher herstellbar ist, wobei dennoch eine hochgenaue Positionierung des Schaftes mit dem Zentrierarm gegenüber der Einspannvorrichtung gewährleistet sein muß.

Diese Aufgabe wird durch ein Verfahren gemäß Patentanspruch 1 gelöst.

Bei dem Verfahren gemäß der vorliegenden Erfindung wird der Schaft zunächst aus einem plastisch verformbaren, relativ weichen Material gegossen, was durch Metalldruckguß für die Materialien Leichtmetalle und Zinklegierung erfolgen kann. Ebenfalls kann der Schaft aus Leichtmetall, einer Zinklegierung oder einem Sintermaterial gefertigt werden. Hierbei wird auch bei Einhaltung hoher Genauigkeiten lediglich eine Gußgenauigkeit in der Größenordnung von einigen Hundertstel Millimeter erreicht. Nachfolgend wird der Schaft mit seinem einstückig in ihn übergehenden Zentrierarm in ein Kalibrierwerkzeug gedrückt, das den Zentrierarm zumindest im Bereich der Anlageflächen mit der Nut der Einspannvorrichtung plastisch verformt. Bei dieser plastischen Verformung wird eine Genauigkeit der Anlageflächen im Mikrometerbereich erzielt und ferner eine Verdichtung des Materials im Bereich der Anlageflächen erreicht.

Vorzugsweise wird der Zentrierarm im Bereich seiner Anlageflächen durch eine Oberflächenbehandlung weiter verfestigt.

Die Oberflächenbehandlung kann das Aufbringen einer verglichen mit dem Material des Zentrierarmes harten metallischen Oberflächenbeschichtung oder durch eloxierendes zentrierarmes Geschehen.

Vorzugsweise besteht die Oberfläche aus Nikkel.

Es ist jedoch möglich, auch ohne eine derartige Oberflächenbehandlung auszukommen, da die Oberfläche des Zentrierarmes im Bereich der Anlageflächen durch den Herstellungsschritt des Kalibrierens mittels plastischer Materialverformung verfestigt ist.

Die alleine auf diese Weise erzielte Oberflächenfestigkeit widerstand bei praktischen Versuchen 40.000 Wechsellasten, ohne daß eine für die Praxis bedeutungsvolle Abweichung in der Genauigkeit eingetreten wäre.

Für das erfindungsgemäße Verfahren ist es ohne Belang, ob der Herstellungsschritt des Vernikkelns der Oberfläche vor oder nach dem Kalibrieren erfolgt. Erfolgt das Vernickeln nach dem Kalibrieren, so kann bei sehr hohen Genauigkeitsanforderungen noch ein weiteres Nachkalibrieren zweckmäßig sein.

Ebenfalls ist es möglich, den Zentrierarm im Bereich seiner Anlageflächen durch Kugelpolieren weiterzubehandeln.

Beim Kugelpolieren wird der Schaft in einen Behälter gegeben, der eine Vielzahl kleiner Teile enthält, die beispielsweise Metallkugeln sein können, die jeweils gleiche oder auch unterschiedliche Durchmesser haben. Sodann wird der Behälter für eine gewisse Zeitdauer bewegt, so daß die Kügelchen durch die Bewegung laufend auf die Oberfläche des Zentrierarmes aufschlagen. Hierdurch erhält man eine Verdichtung des Materials an der Oberfläche des Zentrierarmes und damit eine Materialverfestigung. Auch erhält man eine gewisse Oberflächenstruktur durch eine Vielzahl von kleinen Kratern. Diese Oberflächenstruktur ist sehr vorteilhaft, da die kleinen Krater kleinere Schmutzpartikel aufnehmen können, ohne daß dadurch die mögliche Spanngenauigkeit beeinträchtigt wird.

Ein dem Kugelpolieren verwandtes Verfahren ist das Kugelstrahlen des Zentrierarmes, wodurch die Oberfläche insbesondere bei Verwenden eines Aluminiumdruckgusses eine Glättung der Korngrenzen und eine Kaltverfestigung erfährt. Die Art der Behandlung beseitigt unerwünschte, schuppenförmige Oberflächenstrukturen eines unbehandelten Aluminiumdruckgusses.

Ein weiterer Vorteil einer unvernickelten Aluminiumdruckgußoberfläche im Bereich der Anlagefläche des Zentrierarmes besteht darin, daß bei Verschmutzung kleine Partikel, die zwischen den Zentrierarm und die Einspannvorrichtung geraten, in das Aluminiummaterial eingedrückt werden. Bis zu einem gewissen Verschmutzungsgrad wird die Positioniergenauigkeit beziehungsweise Repetiergenauigkeit nicht beeinträchtigt.

Gemäß einer vorteilhaften Ausgestaltung wird als Material für den Schaft und den Zentrierarm Aluminium oder eine Aluminiumlegierung gewählt.

Aluminium hat sich als besonders geeignet für die Kalibrierung oder plastische Verformung durch Einpressen in ein Kalibrierwerkzeug erwiesen. Ferner wird bei einer Herstellung des Schaftes mit dem Zentrierarm aus Aluminium eine erwünschte Reduzierung des Gewichtes gegenüber demjenigen Gewicht erzielt, das bei Herstellung aus einem Maschinenstahl hingenommen werden müßte. Verwendet man Aluminium oder eine Aluminiumlegierung, so wird als Oberflächenbehandlung auch ein Eloxieren die gewünschte Oberflächenhärte bringen.

Die bevorzugte Gußgenauigkeit für den Zentrierarm liegt im Bereich seiner Anlageflächen bei etwa 10 bis 50 Mikrometer, vorzugsweise etwa 20 Mikrometer, wobei die durch die anschließende Kalibrierung erzielbare Formgenauigkeit ausgehend von derartigen Gußgenauigkeiten im Bereich von 1 bis 5 Mikrometer, üblicherweise etwa 3 Mikrometer liegt.

Die angegebenen Gußgenauigkeiten lassen sich noch mit erträglichen Aufwand in der Herstellung der Gußform und der Durchführung des Aluminiumdruckgußes oder eines sonstigen Gußes erzielen.

Erstaunlicherweise wird trotz der relativ starken Abweichung der Gußform von der Sollform durch das Kalibrieren eine im Mikrometerbereich liegende Formtreue erzielt, wobei durch das Kalibrieren auch eine erste Verfestigung der Oberfläche auftritt. Eine besonders harte Oberfläche, die auch fertigungstechnisch bei Aluminiumdruckguß problemlos aufbringbar ist, wird durch Vernickeln, Eloxieren oder durch eine mechanische Oberflächenbehandlung wie Kugelpolieren oder Kugelstrahlen erzielt.

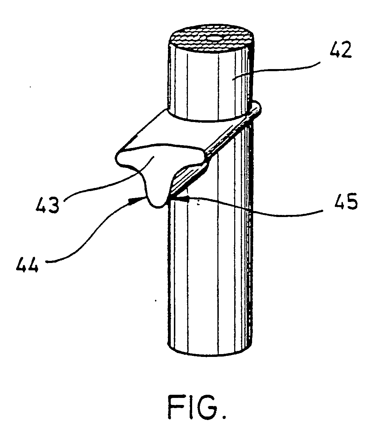

Nachfolgend wird unter Bezugnahme auf die beiliegende Zeichnung eine bevorzugte Ausführungsform eines nach dem erfindungsgemäßen Verfahren gefertigten Schaftes mit einem einstükkig in diesen übergehenden Zentrierarm näher erläutert.

Es zeigt:

Die einzige Figur
eine perspektivische Darstellung eines Schaftes mit einem einstückig in den Schaft übergehenden Zentrierarm.

Der nach dem erfindungsgemäßen Verfahren hergestellte und in der einzigen Figur perspektivisch dargestellte Gegenstand umfaßt einen im wesentlichen zylindrischen Schaft 42 mit einem einstückig in den zylindrischen Schaft übergehenden, rechtwinklig gegenüber diesem verlaufenden Zentrierarm 43. Ein solcher Schaft mit Zentrierarm läßt sich sowohl bezüglich seiner axialen Lage wie auch bezüglich seiner Drehlage besonders genau gegenüber einer an sich bekannten Einspannvorrichtung für derartige Schafte mit einer Nut zum Aufnehmen des Zentrierarmes festlegen. Innerhalb der Einspannvorrichtung bewirkt der Schaft 42 eine axiale Ausrichtung und der Zentrierarm 43 eine Drehwinkelausrichtung.

Der Schaft 42 wird zusammen mit dem Zentrierarm 43 einstückig im Aluminiumhochdruckguß gegossen. Anschließend wird der Schaft tiefgezogen und der Zentrierarm 43 im Bereich der gewünschten Anlageflächen 44, 45 durch Eindrücken in ein (nicht dargestelltes) Kalibrierwerkzeug kalibriert, wobei eine plastische Verformung des Zentrierarmes 43 im Bereich der Anlageflächen 44, 45 sowie eine Oberflächenverdichtung in diesem Bereich stattfindet. Anschließend wird der Schaft 42 zusammen mit dem Zentrierarm 43 vernickelt oder mit einer anderen geeigneten, harten Oberflächenbeschichtung versehen.

**Patentansprüche**

1. Verfahren zum Herstellen eines im wesentlichen zylindrischen Schaftes (42) mit einem einstückig in den Schaft (42) übergehenden Zentrierarm (43), der gegen eine Einspannvorrichtung mit einer Nut zum Aufnehmen des Zentrierarmes (43) hochgenau festlegbar ist,

gekennzeichnet durch folgende Herstellungsschritte:
   - Metalldruckgießen, Sintern beziehungsweise Fließpressen des Schaftes (42) mit dem Zentrierarm (43) aus einem Leichtmetall, aus Messing, aus einer Zinklegierung oder aus einem Sintermaterial; und
   - Kalibrieren des Zentrierarmes (43) zumindest im Bereich seiner Anlageflächen (44, 45) mit der Nut der Einspannvorrichtung durch Eindrücken des Zentrierarmes (43) in ein Kalibrierwerkzeug, das aus einem bezüglich des Materials des Schaftes und des Zentrierarmes härteren Material besteht und das zumindest im Bereich der Anlageflächen (44, 45) eine Negativform bezüglich der gewünschten Form des Zentrierarmes (43) aufweist, wobei der Zentrierarm (43) zumindest im Bereich der Anlageflächen (44, 45) eine plastische Materialverformung erfährt.

2. Verfahren nach Anspruch 1, dadurch gekennzeichnet,

daß vor oder nach dem Herstellungsschritt des Kalibrierens die Oberfläche des Zentrierarmes (43) zumindest im Bereich ihrer Anlageflächen (44, 45) mit der Nut der Einspannvorrichtung durch eine Oberflächenbehandlung weiter verfestigt wird.

3. Verfahren nach Anspruch 2, dadurch gekennzeichnet,

daß die Oberflächenbehandlung das Aufbringen einer verglichen mit dem Material des Zentrierarmes (43) harten metallischen Oberflächenbeschichtung beinhaltet.

4. Verfahren nach Anspruch 2, dadurch gekennzeichnet,

daß die Oberflächenbehandlung das Eloxieren des Zentrierarmes (43) beinhaltet.

5. Verfahren nach Anspruch 2, dadurch gekennzeichnet,

daß die Oberflächenbehandlung ein Kugelpolieren oder Kugelstrahlen des Zentrierarmes (43) zumindest im Bereich seiner Anlageflächen (44, 45) mit der Einspannvorrichtung beinhaltet.

6. Verfahren nach einem der Ansprüche 1 bis 5, dadurch gekennzeichnet,

daß das Leichtmetall Aluminium oder eine Aluminiumlegierung ist.

7. Verfahren nach einem der Ansprüche 1 bis 6, dadurch gekennzeichnet,

daß der Zentrierarm (43) beim Gießen im Bereich seiner Anlageflächen (44, 45) mit der Nut der Einspannvorrichtung mit einer Genauigkeit von etwa 10 bis 50 Mikrometer, üblicherweise etwa 20 Mikrometer, gegossen wird, und

daß die Formgenauigkeit der Anlageflächen (44, 45) nach deren plastischer Verformung durch das Kalibrieren in dem Bereich zwischen 1 und 5 Mikrometer, üblicherweise etwa 3 Mikrometer, liegt.

8. Verfahren nach einem der Ansprüche 1 bis 3, dadurch gekennzeichnet,

daß die Oberflächenbeschichtung durch Vernickeln erzeugt wird.

FIG.

5